# EUROPEAN PATENT SPECIFICATION

(11) **EP 3 844 695 B1**
(45) Date of publication and mention of the grant of the patent: **17.01.2024**
(21) Application number: 19855905.6
(22) Date of filing: 22.08.2019
(51) Int. Cl.: G05B 19/418, G06Q 10/06, B27B 31/00, G06Q 10/0833, G06Q 50/04

(54) **METHOD AND SYSTEM FOR ENHANCING TRACEABILITY IN A PRODUCTION LINE BY CREATING A TIME-BASED FINGERPRINT**
VERFAHREN UND SYSTEM ZUR VERBESSERUNG DER RÜCKVERFOLGBARKEIT IN EINER PRODUKTIONSLINIE DURCH ERZEUGUNG EINES FINGERABDRUCKS AUF ZEITBASIS
PROCÉDÉ ET SYSTÈME POUR AMÉLIORER LA TRAÇABILITÉ DANS UNE CHAÎNE DE PRODUCTION EN CRÉANT UNE EMPREINTE DIGITALE BASÉE SUR LE TEMPS

(30) Priority: 27.08.2018 SE 1851020
(43) Date of publication of application: 07.07.2021
(73) Proprietor: Digiwood AB, 589 33 Linköping (SE)
(72) Inventor: LUOMALA, Petri, 504 95 BORÅS (SE); LYCKEN, Anders, 167 74 BROMMA (SE)
(74) Representative: Kransell & Wennborg KB
(86) International application number: PCT/SE2019/050772
(87) International publication number: WO 2020/046189

(56) References cited:
- EP-A2- 1 169 144
- WO-A1-2018/108392
- US-A1- 2005 246 045
- US-A1- 2005 246 045

## Description

### Field of the Invention

The present invention relates to a method and system for linking item parameters of items processed in a production line. The present invention further relates to a computer program product.

### Background of the Invention

In processing industry it is desirable to perform various measurements on workpieces along the production line in order to ensure a high quality final product. However, this requires good traceability of the workpieces processed in the production line in order to link measured data from several production steps to the final product. With such traceability it is for example possible to identify a malfunctioning process step in the production line.

One common way to trace workpieces in a production line is to use physical tags on the workpieces. Such tags may for example be based on near field communication tags, bar codes, QR-codes, RFID tags, and other physical tags that may be read out along the production line. For example, in the automotive industry it is common to attach a RFID tag to the vehicle. The tag transmits identification information to tracking systems comprising sensors along the production line.

However, in some production lines the workpiece itself doesn't allow for the attachment of a physical tag. This is the case in several raw material processing production lines such as for example, in the lumber industry, in some food processing industries, in textile production, to mention a few, in which the workpiece is processed and even altered along the production line.

US2006/0260718 describes lumber identification through video recognition. In US2006/0260718, the recognition relies on identifying unique, naturally occurring characteristics of lumber. The video recognition is based on scanning ends of lumber in order to characterize the pattern in the wood itself. The characterized pattern serves as a "fingerprint" for the specific piece of lumber.

However, the system proposed by US2006/0260718 requires the mounting of scanners in the production line which likely is a costly investment. Furthermore, it may require adapting the production line for fitting the identification system including the scanners in the production line.

US2005/0246045 describes a quality control apparatus that controls a manufacturing process. The apparatus includes a data storing part which collects measurement data from multiple devices disposed in the manufacturing process. The collected measurement data is stored along with measured time or collected time. The apparatus includes a scheduler which associates the measurement data with each other in consideration of dead time generated between the devices at measured time or collected time.

Accordingly, there is room for improvements with regards to traceability of workpieces in a production line.

### Summary

In view of the above-mentioned and other drawbacks of the prior art, it is an object of the present invention to provide an improved method and system for linking data associated with different items processed in a production line.

According to a first aspect of the present invention, it is therefore provided a method for linking item parameters of items processed in a production line comprising a plurality of measuring devices configured to measure item parameters, the method comprising: retrieving a time series of time stamps for each measuring device indicative of when an item passed the respective measuring device in the production line, wherein each time stamp is associated with a measured item parameter value; determining a set of time differences between consecutive time stamps for each of the time series of time stamps, wherein each time difference is associated with a time stamp; correlating subsets of time differences associated with at least two of the measuring devices, wherein, when the subsets of time differences are determined to match, associating the corresponding time stamps from the matching subsets of time differences with each other, thereby linking the associated time stamps and the associated measured item parameters to each other; and storing the associated time stamps in a data storage device.

The present invention is based on the realization that the time difference between items passing through a production line is normally not equal between all consecutive items. A set of time differences therefore produces a pattern which is similar at each measuring device along the production line for the same set of items. Accordingly, a set of time differences may form unique pattern of time differences which may be used for identifying and matching set of time differences determined from time stamps from different measuring devices. A sufficiently large number of time differences in the set may thus serve as a "fingerprint" for one set of items in the production line. This "fingerprint" may be searched for in other subsets of time differences in order to identify the corresponding time stamps for item parameter values collected by other measuring devices in the production line.

The time stamps are associated with respective item parameter value. Thus, when an item parameter is measured, the item parameter value is stored together with a time stamp corresponding to the time when the item parameter was stored. This type of time stamp is common practice in data storage processes. The time stamp often includes both a date and a time of the day.

Generally, a production line comprises a set of operations performed on a raw workpiece or item to produce a final product. The workpiece or item is transported between operation locations in an automated manner such that their relative locations with respect to each other are substantially unchanged.

The production line is a linear production line. This means that the item is placed in the production line and is transported through the production line without intermediate storage.

The items are preferably not all of the same size, but instead their sizes are distributed over a range if sizes.

The measuring devices may measure any item parameter and is not limited to a specific type of item parameter as long as a time stamp is collected and associated with the measured item parameter value.

The time difference is a subtraction between the consecutive time stamps such that a time difference in e.g. seconds is provided.

An item parameter may relate to physical properties of the item, e.g. geometric parameters, weight, humidity levels, optical properties (e.g. color, transparency, etc.), electrical properties, and photos of the items. Furthermore, item parameters may also relate to production related parameters which affect the item itself or the production process for the item, such as e.g. production delays, power efficiency of machines in the production line, engine speed of production line engines, power consumption of the machines, process performance of individual production steps, conveyor belt speed, etc.

The term "corresponding time stamps" means for example the time stamps at the same consecutive order in the respective subset. Accordingly, the corresponding time stamps are time stamps associated with the same item but for time stamps associated with item parameter values collected by different measuring devices. The corresponding time stamps are associated with each other in the data storage device to thereby link them together. Using the linked time stamps it is then possible to track measured item parameter values for the same item but measured with different measuring devices.

The measured item parameter values are also stored in a data storage device, either in the same data base as where the time stamps are stored or in a data base different from the one where the time stamps are stored. The stored time stamps may serve as an index for the stored measured item parameters.

With the inventive concept, there is no need for additional hardware for tracking measured item parameters associated with a single item in the production line. Instead the time stamps associated with the measured data are used for tracking the item parameters.

The data storage device may be provided in the form of a database for storing digital data.

In some embodiments, the corresponding time stamps from the matching subsets of time differences may be one time stamp associated with the first time difference in the respective subset of time differences. In other words, the first time stamp, in the subset of time stamps that are used for determining the subsets of time differences, are used as corresponding time stamps. For example, the first time stamp in a subset of time stamps is selected. The time differences between consecutive time stamps starting from the fist time stamp is determined for a subset of time stamps. When matching subsets of time differences are found, the first time stamps in each subset of time stamps are associated with each other, with the conclusion that they originate from the same item in the production line. Next the method moves on to the subsequent time stamp and the method is repeated. Thereby a relatively straight forward way of linking time stamps together is provided.

According to some embodiments, the method may comprise determining a subset time difference defined as the time difference between the corresponding time stamps from the matching subsets of time differences; comparing the subset time difference to a predetermined subset time difference, and wherein when the subset time difference is determined to match the predetermined subset time difference, storing the associated time stamps in the data storage device. Accordingly, as a further check that the time stamps originates from the same item and thus further improving the matching accuracy, the time difference between the corresponding time stamps from different subsets may be analyzed and should be equal to or at least similar to a predetermined value. This is because the measuring devices are at fixed locations with respect to each other. Consequently, the time difference between corresponding time stamps, i.e. associated with the same item passing through the production line, should at least partly match a time difference calculated based on knowledge of the speed of transportation of the items in the production line and the distance between measuring devices. Alternatively, it may be checked the time difference between corresponding time stamps, i.e. the subset time differences are substantially the same for each set of corresponding time stamps.

The match between the subset time difference and a predetermined subset time difference does not have to be a perfect match, but it has to be found that the subset time difference and the predetermined subset time difference are sufficiently close to each other such that it can be concluded with relatively high probability that they correspond to each other.

According to some embodiments, the method may include prior to correlating the subsets of time differences, re-sampling the set of time series associated the time differences to form equally spaced time stamps, and interpolating the time differences according to the re-sampled time stamps. In this way the method works even if some items have changed their distance to neighboring items, or if some items have accidently or intentionally been removed from the production line.

The method steps are preferably repeated for a plurality of the items that have passed through the production line. Thus, the method may step through a plurality of time stamps associated with each of a plurality of items in order to find associated time stamps for a plurality of items. In this way a large amount of associated time stamps may be found which advantageously lead to a possibility to study a large amount of associated item parameters.

In embodiments, correlating the subsets of time differences may comprise finding a best match between series of time difference values. Accordingly, to find a match comprises to find a best match and not necessarily a perfect match. The correlation method may be based on machine learning techniques.

In some embodiments may the time stamp and each time difference be stored in the data storage device.

In some embodiments it may be included to correlate subsets of time differences associated with all the measuring devices in the production line.

In some embodiments the time series may comprises a predetermined number of time stamps. The predetermined number of time stamps should be sufficiently high such that a unique subset of time differences may be formed. For example, the number of time stamps may be at least about 50, at least about 70, or preferably at least about 90, such as for example about 100.

According to embodiments, the sets of time differences may be generated by entering the items in the production line with varying time delay between the items. For example, in production lines where the items are of equal size, the time differences between consecutive time stamps at a measuring device will be the same. For such production lines, unique patterns of time differences, i.e. "fingerprints" will be difficult to identify. For such production lines, one may instead obtain the time differences by entering the items in the production line with different time delay between the items. The items may for example be entered at random times to thereby create random time differences between items.

According to embodiments, the sets of time differences may be generated by entering the items in the production line with predetermined varying time delays between the items, to thereby generate predetermined sets of time differences. Accordingly, instead of creating random distributed time differences, the set of time differences may be formed accordingly to a predetermined pattern. For this, the items are entered into the production line with predetermined varying delays to in this way obtain unique patterns of time differences where the patterns are predefined. This may additionally be used for communication purposes. For example, the predetermined pattern of time differences may be used for holding information. The type of information may for example be for allowing communication between measuring devices, or for virtual tagging of the items i.e. items with a certain pattern of time differences may belong to the same group of items. Thus, using predetermined time differences allow for coding using the thereby obtained known patterns of time differences.

According to a second aspect of the present invention, there is provided a system for linking item parameters of an item processed in a production line comprising a plurality of measuring devices configured to measure item parameters, the system comprises: a data storage device; and a control unit configured to receive data from the measuring devices, the data comprising time stamps and item parameters measured by the measuring devices at the times of the time stamps, wherein the control unit is configured to: retrieve a time series of time stamps from each measuring device, wherein each time stamp is associated with a measured item parameter; determine a set of time differences between consecutive time stamps for each of the time series of time stamps, wherein each time difference is associated with a time stamp; correlate subsets of time differences associated with at least two of the measuring devices, associate corresponding time stamps from the matching subsets of time differences with each other, thereby linking the associated time stamps and the associated measured item parameters to each other, store the associated time stamps in a data storage device.

According to some embodiments, the production line may comprise a transportation arrangement for collectively transporting the items through the production line. The transportation arrangement may comprise conveyor belts, roller conveyors, chain conveyors, etc.

The items are preferably of the same type. For example, in various embodiments the items are of one of the types: logs, or textiles, or glassware, or food items.

Various types of measuring devices are applicable and within the scope of the invention and are not limited to the measuring devices disclosed herein. Some exemplary measuring devices include laser measurement devices, radar, x-ray devices, weight sensors, temperature sensors, humidity sensors. Example laser measurement devices include LiDAR.

The system may comprise a display for visually presenting the item parameters associated with respective corresponding time stamps from the matching subsets of time differences for individual items in a collective manner. Thus, item parameters captured at different times and locations may advantageously be presented in a single visualization which provides improved ways of analyzing data for items passed through a production line, and in particular for items which are not possible to physically tag in the production line.

Further embodiments of, and effects obtained through this second aspect of the present invention are largely analogous to those described above for the first aspect of the invention.

There is further provided a production line comprising the system for tracking item parameters.

Furthermore, according to a third aspect of the invention there is provided a computer program product comprising a computer readable medium having stored thereon computer program means for linking item parameters of items processed in a production line comprising a plurality of measuring devices configured to measure item parameters, wherein the computer program product comprises: code for retrieving a time series of time stamps for each measuring device indicative of when an item passed the respective measuring device in the production line, wherein each time stamp is associated with a measured item parameter value; code for determining a set of time differences between consecutive time stamps for each of the time series of time stamps, wherein each time difference is associated with a time stamp; code for correlating subsets of time differences associated with at least two of the measuring devices; code for, when the subsets of time differences are determined to match, associating the corresponding time stamps from the matching subsets of time differences with each other, thereby linking the associated time stamps and the associated measured item parameters to each other; and code for storing the associated time stamps in a data storage device.

In summary the present invention relates to and a system for linking item parameters of items processed in a production line comprising a plurality of measuring devices configured to measure item parameters. The method comprises retrieving a time series of time stamps for each measuring device indicative of when an item passed the respective measuring device. Each time stamp is associated with a measured item parameter value. A set of time differences are determined between consecutive time stamps for each of the time series of time stamps. Each time difference is associated with a time stamp. Correlating subsets of time differences associated with at least two measuring devices. When the subsets of time differences match, associating the corresponding time stamps from the matching subsets of time differences with each other, thereby linking the associated time stamps and the associated measured item parameters to each other. The associated time stamps are stored in a data storage device

Further features of, and advantages with, the present invention will become apparent when studying the appended claims and the following description.

### Brief Description of the Drawings

These and other aspects of the present invention will now be described in more detail, with reference to the appended drawings showing an example embodiment of the invention, wherein:
Fig. 1 conceptually illustrates an example production line;
Fig. 2 is a box-diagram of a system according to example embodiments of the invention;
Fig. 3 conceptually illustrates time stamps and time differences for a set of items;
Fig. 4 conceptually illustrates time stamps and matching time differences for a set of items;
Fig. 5 conceptually illustrates time stamps and matching time differences for a set of items;
Fig. 6 conceptually illustrates the re-sampling of time stamps and corresponding interpolation of the time differences;
Fig. 7 conceptually illustrates a correlation procedure for correlating sets of time differences;
Fig. 8 conceptually illustrates a set of linked time stamps for a plurality of items;
Fig. 9 is a flow-chart of method steps according to embodiments of the invention;
Fig. 10 is a flow-chart of method steps according to embodiments of the invention; and
Fig. 11 schematically illustrates a possible way to present item parameter values linked via their time stamps.

### Detailed Description of Example Embodiments

In the present detailed description, various embodiments of the inventive concept are mainly described with reference to a production line in the form of lumber production line. However, it should be noted that this by no means limits the scope of the present invention, which equally well applicable to any type of linear production line where items are transported. Such production lines include but are not limited to production lines for processing textiles, glassware, food items, etc.

Like reference characters refer to like elements throughout the description, claims and figures.

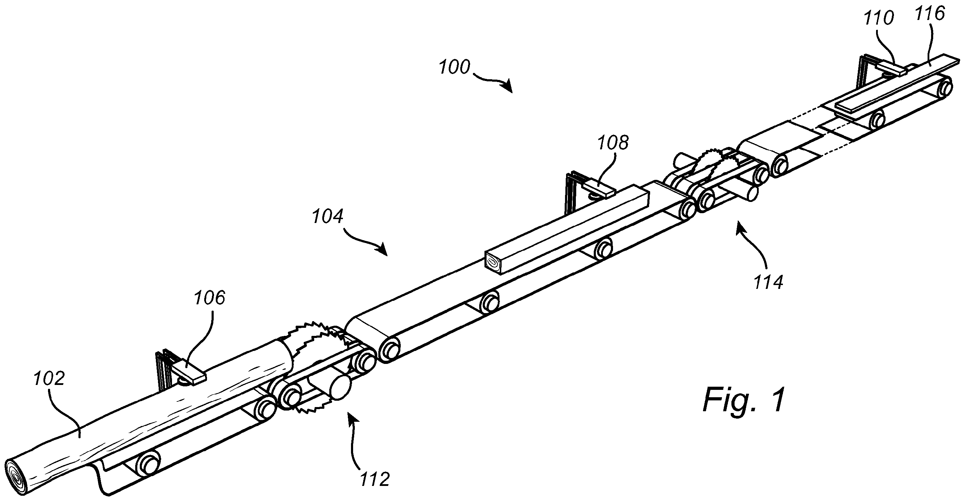

Fig. 1 schematically illustrates an exemplary production line 100. The exemplary production line is here shown as a production line for processing logs. Here an item in the form of a log 102 is entered on one side of the production line and the final product may be lumber of predetermined dimensions.

A log 102 is transported on a transportation arrangement such as a conveyor belt 104. The log 102 passes a number of measuring devices 106, 108, and 110. In fig. 1 are three measuring devices shown for exemplary purposes. However, any number of measuring devices is applicable and within the scope of the present disclosure.

The measuring devices 106, 108, and 110 are each configured to measure an item parameter which may be used to characterize the log 102. The item parameters may relate to e.g. the width, humidity, weight, volume, visual patterns, of the individual logs. The production line 100 also comprises a plurality of operation points 112, 114 where the logs are processed. The operation points 112, 114 here shown are only for illustration purposes and are not meant to represent a complete set of operation points for producing lumber from a log.

As a log 102 is transported by the conveyor belt 104 through the production line 100 the measuring devices 106, 108, 110 collect item parameter values at different times. For example, the measuring device 106 may acquire a first value of a first item parameter and the measuring device 108 may acquire a first value of a second item parameter at a later time for the same log 102. When a parameter value of an item parameter is acquired by a measuring device 106, 108, or 110, a time stamp associated with the item parameter value is also acquired and stored with the item parameter value. A production line such as the one shown in fig. 1 may process a large amount of items per day, for example about 50 000 items.

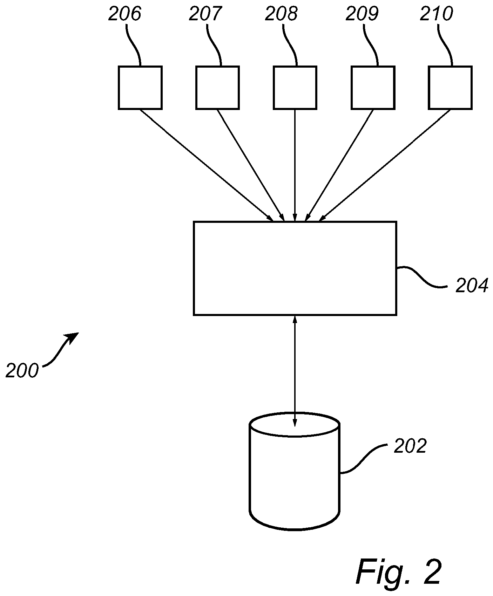

Fig. 2 illustrates a system 200 according to exemplary embodiments. The system may be implemented in a production line as the one shown in fig. 1. The system 200 comprises a data storage device 202 and a control unit 204. The control unit is configured to receive data from a plurality of measuring devices 206, 207, 208, 209, 210, the data comprising time stamps and item parameters measured by the measuring devices at the times of the time stamps. The control unit 204 may be in continuous communication with the measuring devices 206, 207, 208, 209, 210, for receiving the data, or the control unit 204 may indirectly receive the data off-line. The control unit 204 is thus configured to retrieve a time series of time stamps from each measuring device. A time stamp is associated with a measured item parameter.

The control unit 204 is further configured to determine a set of time differences between consecutive time stamps for each of the time series of time stamps. Each time difference is associated with a time stamp. The control unit 204 is configured to correlate subsets of time differences associated with at least two of the measuring devices and associate corresponding time stamps from the matching subsets of time differences with each other. Subsequently the associated time stamps are stored in the data storage device 202.

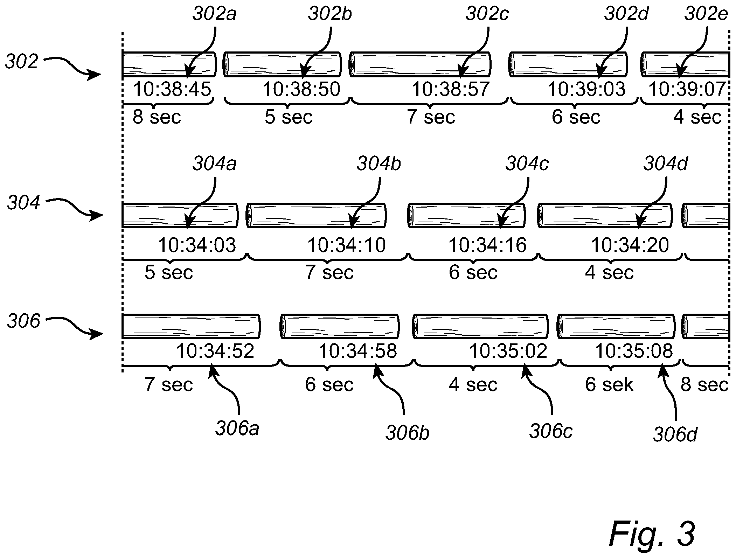

Fig. 3 conceptually illustrates time stamps and time differences for a set of items that has passed three measuring devices (not shown). The upper illustration of the set of items illustrates a time series 302 of time stamps 302a-e for each item at the time when an item parameter was measured by a first measuring device. The middle illustration of the set of items illustrates a time series 304 of time stamps 304a-d for each item at the time when an item parameter was measured by a second measuring device. The bottom illustration of the set of items illustrates a time series 306 of time stamps 306a-d for each item at the time when an item parameter was measured by a third measuring device.

The set of items has passed the first measuring device, subsequently the second measuring device, and finally the third measuring device. The exemplary time stamps are here shown on the format *hours:minutes:seconds.*

Accordingly, for each measuring device there is a time series of time stamps. There is further shown, for each of the time series, a set of time differences calculated based on a subtraction between consecutive time stamps for each of the time series of time stamps. The time differences are here provided in "seconds".

Since the items are transported in a synchronized manner, e.g. on a single or multiple connected conveyors, the time differences should not change between the time of measurement at one measuring device to the time of measurement at another measuring device. It is therefore possible to identify one sequence of time differences in time stamps collected by different measuring devices.

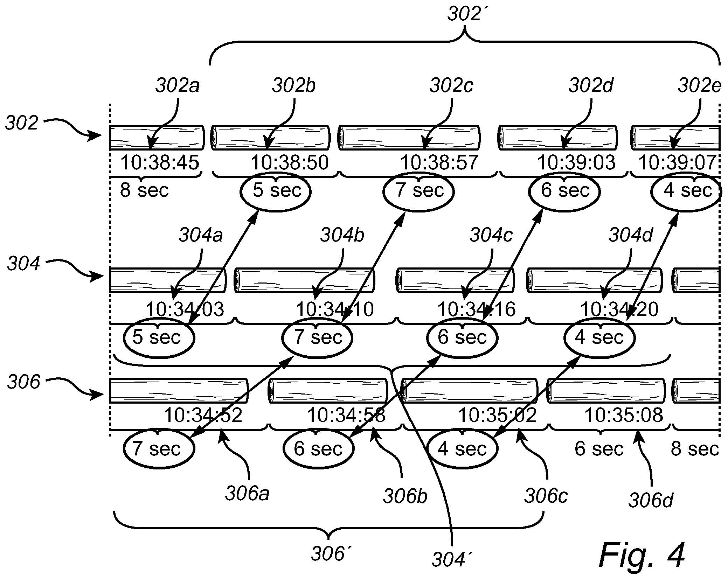

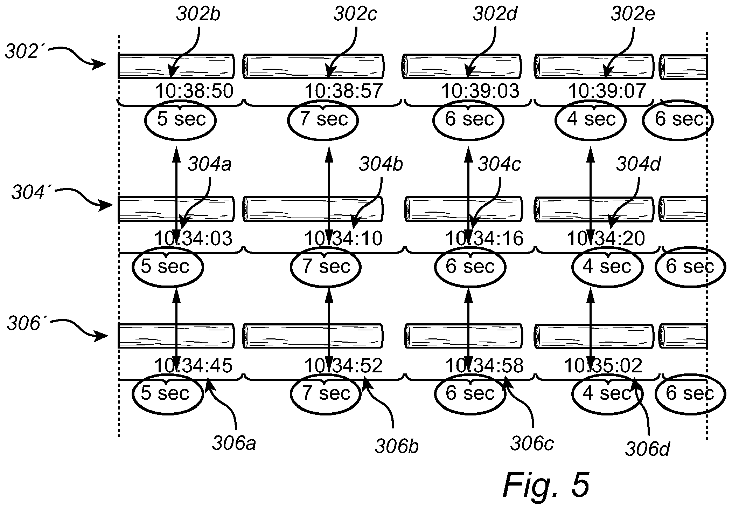

Fig. 4 conceptually illustrates the set of items shown in fig. 3 with the same time stamps and time differences. In fig. 4, a matching sequence 302' of time differences and their time stamps are specifically indicated. Thus, by finding matching sequences of time differences it is possible to associate corresponding time stamps from difference subsets of time stamps with each other. For example, in the present case illustrated in fig. 4, the first time stamp associated with the first matching time difference in each subset of time differences may be selected. In this case, time stamp 304a can be determined to correspond to time stamp 302b. The matching subsets of time differences are more clearly illustrated in fig. 5. Accordingly, the subset 302' is determined to correlate with the subsets 304' and 306'. Corresponding time stamps in each subset 302, 304, 306 can now be concluded to originate from the same item. Matching time differences in each subset of time differences are connected by arrows.

For some production lines are the time differences of varying length due to the nature of the items in the production line. For example, in some production lines the items are of different size, such as in the case of logs, which thereby naturally results in different time differences as described with reference to figs. 3-5. However, embodiments of the present disclosure are applicable also in production lines where the items are of equal size. In such cases, the varying time differences may be obtained by entering the items in the production line, e.g. on a conveyor belt or similar transportation means in the production line, with varying time delays between the items, i.e. with different distance between the items. In this way sets of time differences, as described with reference to figs. 3-5 are obtained even in the case of equally sized items. The items may for example be entered at random times to the production line to thereby generate patterns of varying time differences. Another possible implementation is to enter the items in the production line with predetermined varying time delays between the items, to thereby generate predetermined sets of time differences. In this way, the items may be able to be artificially tagged, or the obtained predetermined patterns of time differences may be used for carrying information. The description herein follows analogously regardless of how the time differences are obtained.

In order to be able to match sequences of time differences also in the event that items are removed somewhere between one measuring devices, the time stamps may be re-sampled to equally spaced time stamps, for example with a one second resolution.

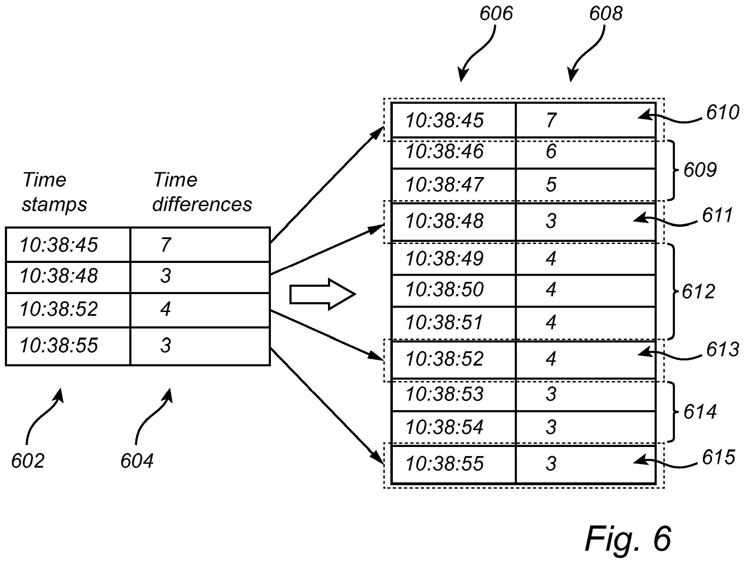

Fig. 6 conceptually illustrates the re-sampling of time stamps and corresponding interpolation of the time differences. Firstly a set of time stamps 602 are collected and time differences 604 are calculated. The first time difference is 7 seconds and is associated with the time stamp 10:38:45. The first time difference is the subtraction between the time stamp 10:38:45 and a previous time stamp not shown in fig. 6. The time difference 3 seconds is the subtraction between time stamp 10:38:45 and the consecutive time stamp 10:38:48, and so on.

In order to facilitate matching between subsets of time differences even if time stamps are missing, the series of time stamps 602 is re-sampled to a resolution of one second. This results in a re-sampled series of time stamps 606 where the original time stamps and time differences are indicated by dashed boxes.

The time differences are interpolated to provide an interpolated set of time differences 608. Thus, the time difference values 609 between calculated time differences 610 and 611 are interpolated time difference values based on the calculated time differences 610 and 611. Similarly, the time difference values 612 between calculated time differences 611 and 613 are interpolated time difference values based on the calculated time differences 611 and 613. Furthermore, the time difference values 614 between calculated time differences 613 and 615 are interpolated time difference values based on the calculated time differences 613 and 615.

The interpolation is performed on each subset of time differences and time stamps such that the correlation may be performed correctly.

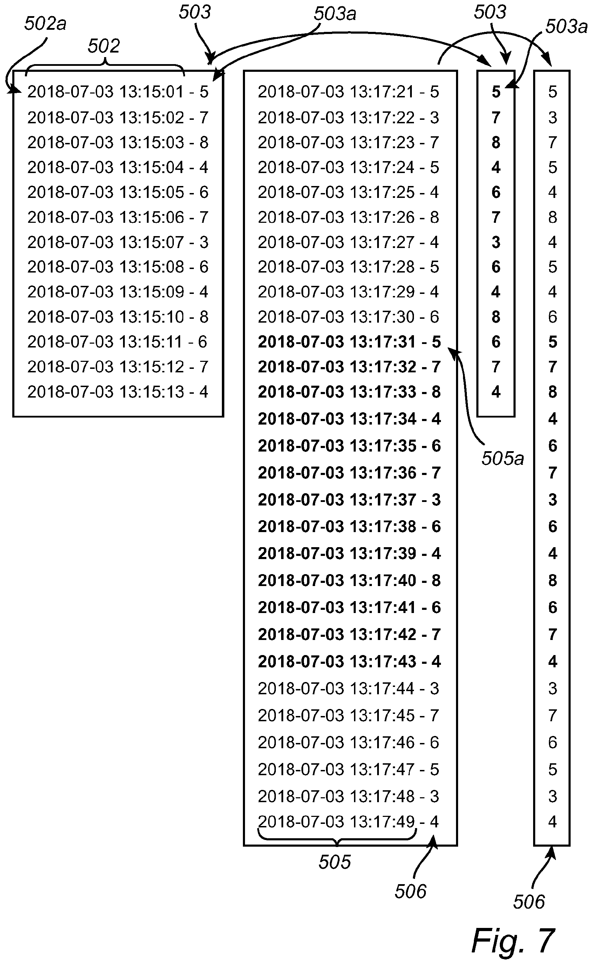

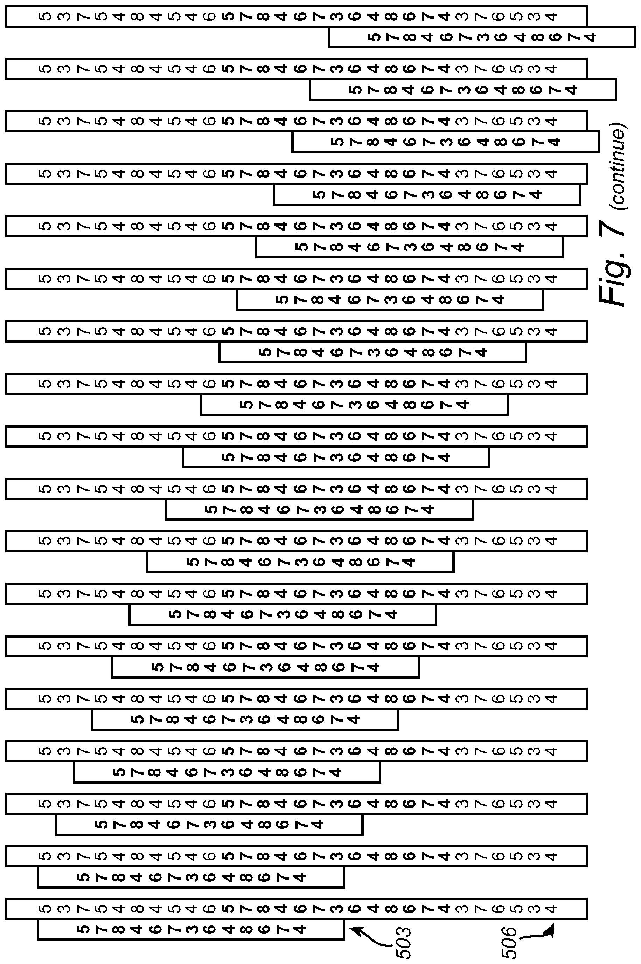

Fig. 7 conceptually illustrates a correlation procedure. In this example case, a series of time stamps 502 has associated time differences 503. The time stamps 502 have been re-sampled to a one-second resolution and the time differences 503 have been interpolated as described with reference to fig. 6. The series of time stamps 502 is associated with measured item parameters by a first measuring device.

Furthermore, a second series of time stamps 505 has associated time differences 506. As with the first time series 502, the time stamps 505 have been re-sampled to a one-second resolution and the time differences 506 have been interpolated. The series of time stamps 505 is associated with measured item parameters by a second measuring device.

In order to link the first time stamp 502a in the series 502 with the corresponding time stamp in the series 505, the time differences 503 including the time difference 503a associated with the first time stamp 502a is correlated with the time differences 506 associated with time stamps 506 at the second measuring device. As is conceptually shown, the series of time differences 503 is compared subsets of time differences in the set of time differences 506 associated with the time stamps from the second measuring device. At some point, a best match is found, whereby it can be concluded that the first time stamp 502a in the series 502 corresponds to the time stamp 505a on the 11^{th} position in the series 505.

The procedure described in fig. 7 is repeated for a plurality of items in order to link several time stamps for an each item with each other.

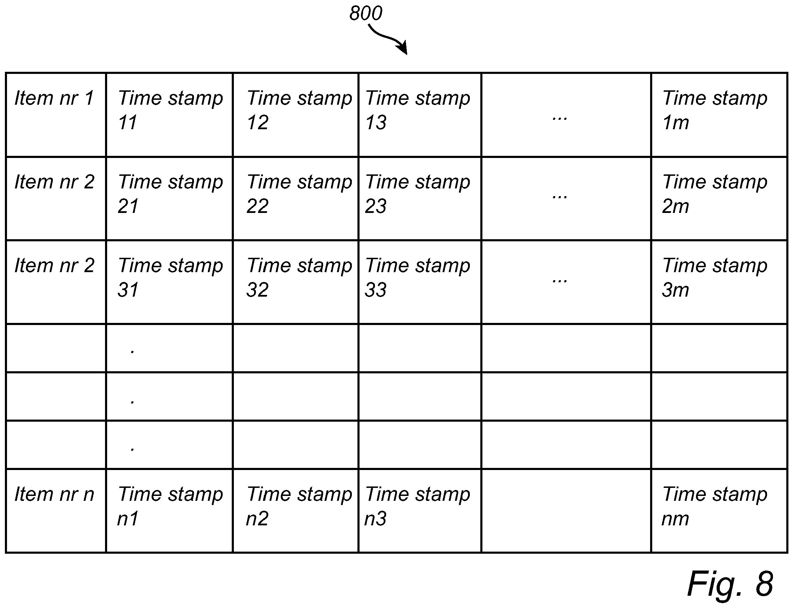

As a result, a set of linked time stamps for a plurality of items may be provided as conceptually shown in fig. 8. Thus, for each of *n* items, m number of time stamps may be linked together, where m is the number of measuring devices in the production line and *n* is the number of items for which time stamps have been linked together.

Subsequently, the time stamps may be used for finding the corresponding item parameter values in a database. For example, for finding the item parameter values for a plurality of item parameters for a single item, it is possible to use the time stamps 800 as indexes for the respective item parameter value since the collected item parameter values are each tagged with the time stamps 800.

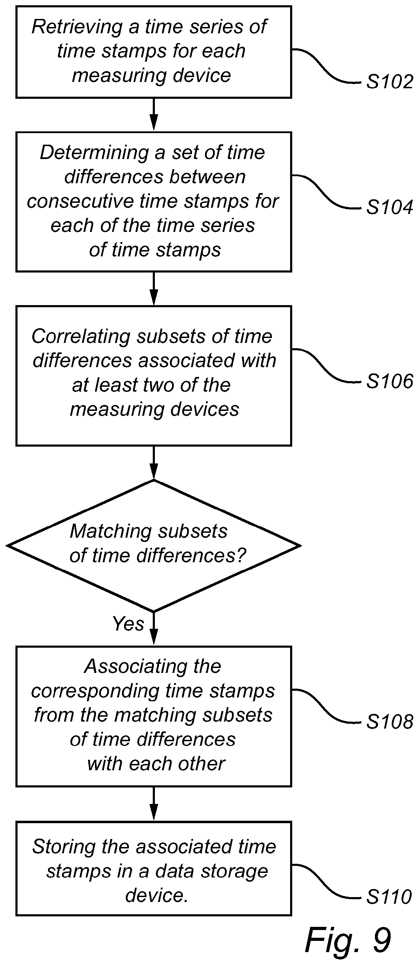

Fig. 9 is a flow chart of method steps according to embodiments of the invention for linking item parameters of items processed in a production line comprising a plurality of measuring devices configured to measure item parameters. In step S102 retrieving a time series of time stamps for each measuring device indicative of when an item passed the respective measuring device in the production line. Each time stamp is associated with a measured item parameter value. In step S104 determining a set of time differences between consecutive time stamps for each of the time series of time stamps. Each time difference is associated with a time stamp. In subsequent step S106 correlating subsets of time differences associated with at least two of the measuring devices. When the subsets of time differences are determined to match, associating the corresponding time stamps from the matching subsets of time differences with each other in step S108. In step S110 storing the associated time stamps in a data storage device.

In some embodiment subset time differences are calculated and are defined as the time difference between corresponding time stamps, i.e. an inter-subset time difference. This subset time differences between time stamps associated with item parameters measured by different measuring devices corresponds to the duration for transporting an item between the respective measuring devices in the production line. For example, now with reference to fig. 1 again, a first time stamp may be collected for a measured item parameter at measuring device 106 for item 102. Subsequently, another item parameter is measured by measuring device 108 for the same item 108 with a second time stamp. The difference between the first time stamp and the second time stamp should correspond to the duration for transporting the item 102 from measuring device 106 to measuring device 108.

Accordingly, the difference between corresponding time stamps that have been processed through the correlation procedure should be substantially the same for each pair of corresponding time stamps. If this is not the case, it may be concluded that the sets of time differences do not match.

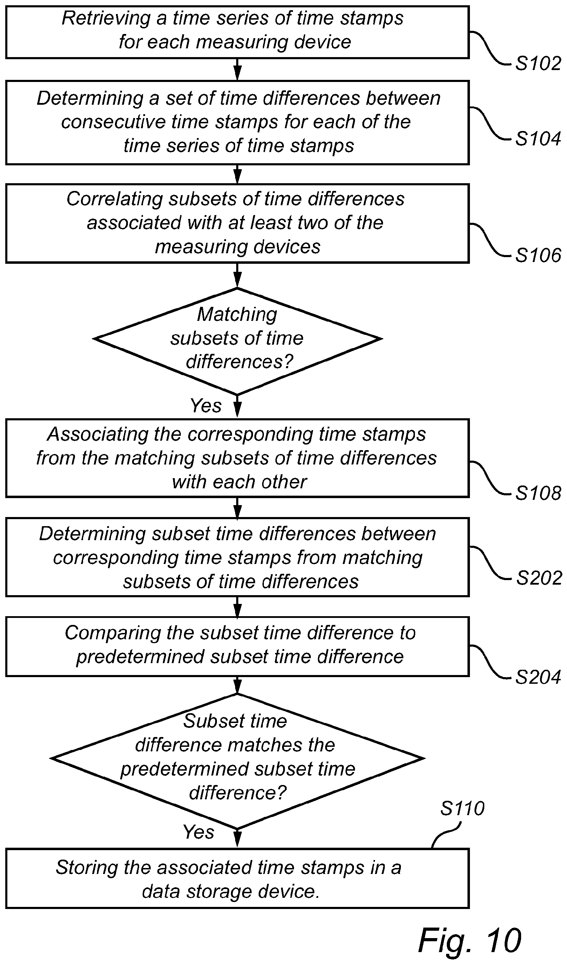

Fig. 10 illustrates further method steps according to embodiments of the invention. The steps already described with reference to fig. 9 will not be repeated here. In step S202 are subset time differences between the corresponding time stamps from the matching subsets of time differences determined. In step S204 comparing the subset time differences to a predetermined subset time difference. The predetermined subset time difference may either be calculated based on prior knowledge of the production line, or it may be the time difference between prior pairs of corresponding time stamps from different subsets. When the subset time differences matches the predetermined subset time difference, store S110 the associated time stamps in the data storage device.

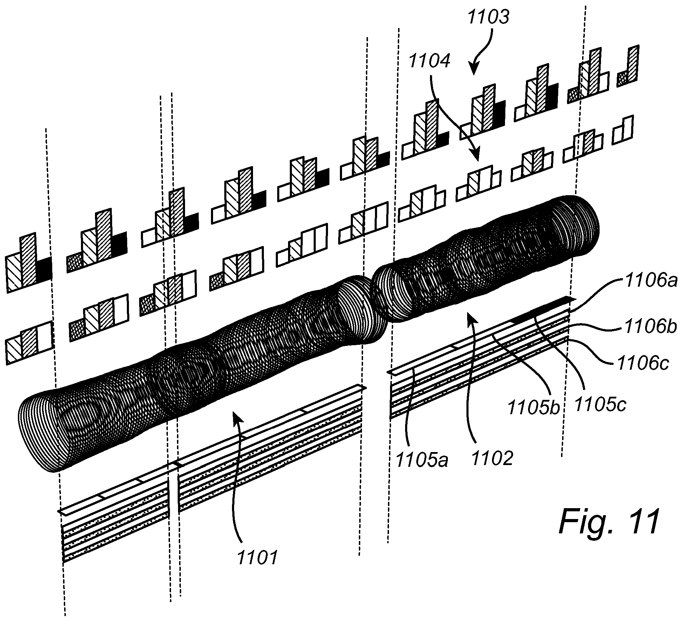

The linked time stamps may advantageously be used as indexes for connecting the associated measured item parameters to each other for individual items. Fig. 11 illustrates a possible way to present such linked item parameter values.

In Fig. 11 are two items 1101 and 1102 visually represented by their geometric shape determined by a measuring device such as a laser measuring device. The geometric shapes for different time stamps and thus at different locations of the item are represented by individual peripheral lines defining the shape. In this particular example case the items are logs. Some further example item parameters which may be at least partly specific to the case of production lines for logs may be engine power levels 1103 used at different operating sites of the production line, log height variation data 1105a, 1105b, 1105c, at different sites, chip filling degree 1106a, 1106b, 1106c at different operation sites which for chip filling degree relates to sawing sites, process interruption information 1104, conveyor speed, etc.

Thus, the invention provides the possibility, due to the capability to link time stamps, to present item parameters captured at different times and locations in a single visualization which provides improved ways of analyzing data for items passed through a production line without the need for additional hardware for tracking the items.

The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

The functionality of the present disclosure may be implemented using existing computer processors, or by a special purpose computer processor for an appropriate system, incorporated for this or another purpose, or by a hardwire system. Embodiments within the scope of the present disclosure include program products comprising machine-readable medium for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general purpose computer, special purpose computer, or special purpose processing machines to perform a certain function or group of functions. Further, the data processing needed for performing anyone of the methods disclosed herein may be performed in the "Cloud", i.e. on a remote server.

Software implementations could be accomplished with standard programming techniques with rule based logic and other logic to accomplish the various connection steps, processing steps, comparison steps and decision steps. A single processor or other unit may fulfill the functions of several items recited in the claims.

## Claims

1. A method for linking item parameters of items (100) processed in a production line (100) comprising a plurality of measuring devices (106, 108, 110) configured to measure item parameters, the method comprising:
- retrieving (S102) a time series (302, 304, 306) of time stamps (302a-e, 304a-d, 306a-d) for each measuring device indicative of when an item passed the respective measuring device (106, 108, 110) in the production line (100), wherein each time stamp is associated with a measured item parameter value;
**characterized by:**
- determining (S104) a set of time differences between consecutive time stamps for each of the time series of time stamps, wherein each time difference is associated with one of its consecutive time stamps;
- correlating (S106) subsets of time differences associated with at least two of the measuring devices, wherein,
- when the subsets of time differences are determined to match, associating (S108) the corresponding time stamps from the matching subsets of time differences with each other, thereby linking the associated time stamps and the associated measured item parameters to each other; and
- storing (S110) the associated time stamps in a data storage device.

2. The method according to claim 1, wherein the corresponding time stamps from the matching subsets of time differences are the time stamps associated with the first time difference in the respective subset of time differences.

3. The method according to any one of claims 1 and 2, comprising:
- determining (S202) a subset time difference defined as the time difference between the corresponding time stamps from the matching subsets of time differences;
- comparing (S204) the subset time difference to a predetermined subset time difference, and wherein
- when the subset time difference is determined to match the predetermined subset time difference, storing (S110) the associated time stamps in the data storage device.

4. The method according to any one of the preceding claims, comprising:
- prior to correlating the subsets, re-sampling the set of time series associated the time differences to form equally spaced time stamps, and interpolating the time differences according to the re-sampled time stamps.

5. The method according to any one of the preceding claims, wherein the method steps are repeated for a plurality of the items that have passed through the production line.

6. The method according to any one of the preceding claims, wherein correlating the subsets of time differences comprises finding a best match between series of time difference values.

7. The method according to any one of the preceding claims, comprising storing the time stamp and each time difference.

8. The method according to any one of the preceding claims, comprising correlating subsets of time differences associated with all the measuring devices in the production line.

9. The method according to anyone of the preceding claims, wherein the time series comprises a predetermined number of time stamps.

10. The method according to claim 9, wherein the predetermined number of time stamps is at least about 50, at least about 70, or preferably at least about 90.

11. The method according to anyone of the preceding claims, wherein the sets of time differences are generated by entering the items in the production with varying time delays between the items.

12. The method according to anyone of the preceding claims, wherein the sets of time differences is generated by entering the items in the production line with predetermined varying time delays between the items, to thereby generate predetermined sets of time differences.

13. A system for linking item parameters of an item (102) processed in a production line (100) comprising a plurality of measuring devices (206, 207, 208, 209, 210) configured to measure item parameters, the system comprises:
- a data storage device (202); and
- a control unit (204) configured to receive data from the measuring devices, the data comprising time stamps and item parameters measured by the measuring devices at the times of the time stamps,
**characterized by:**
the control unit being configured to:
- retrieve a time series (302, 304, 306) of time stamps (302a-e, 304a-d, 306a-d) from each measuring device, wherein each time stamp is associated with a measured item parameter;
- determine a set of time differences between consecutive time stamps for each of the time series of time stamps, wherein each time difference is associated with one of its consecutive time stamps;
- correlate subsets of time differences associated with at least two of the measuring devices;
- associate corresponding time stamps from the matching subsets of time differences with each other, thereby linking the associated time stamps and the associated measured item parameters to each other; and
- store the associated time stamps in a data storage device.

14. The system according to claim 13, comprising a display for visually presenting the item parameters associated with respective corresponding time stamps from the matching subsets of time differences for individual items in a collective manner.

15. A computer program product comprising a computer readable medium having stored thereon computer program means for linking item parameters of items processed in a production line (100) comprising a plurality of measuring devices (206, 207, 208, 209, 210) configured to measure item parameters, wherein the computer program product comprises:
code for retrieving a time series (302, 304, 306) of time stamps(302a-e, 304a-d, 306a-d) for each measuring device indicative of when an item passed the respective measuring device in the production line, wherein each time stamp is associated with a measured item parameter value;
**characterized by:**
code for determining a set of time differences between consecutive time stamps for each of the time series of time stamps, wherein each time difference is associated with one of its consecutive time stamps;
code for correlating subsets of time differences associated with at least two of the measuring devices;
code for, when the subsets of time differences are determined to match, associating the corresponding time stamps from the matching subsets of time differences with each other, thereby linking the associated time stamps and the associated measured item parameters to each other; and code for storing the associated time stamps in a data storage device.

## Patentansprüche

1. Verfahren zum Verknüpfen von Produktionsartikelparametern von Produktionsartikeln (100), die in einer Produktionslinie (100) verarbeitet werden, die mehrere Messvorrichtungen (106, 108, 110) umfasst, die zum Messen von Produktionsartikelparametern konfiguriert sind, wobei das Verfahren umfasst:
- Abrufen (S102) einer Zeitreihe (302, 304, 306) von Zeitstempeln (302a-e, 304a-d, 306a-d) für jede Messvorrichtung, die angibt, wann ein Produktionsartikel die jeweilige Messvorrichtung (106, 108, 110) in der Produktionslinie (100) passiert hat, wobei jeder Zeitstempel einem gemessenen Produktionsartikelparameterwert zugeordnet wird;
**gekennzeichnet durch**:
- Bestimmen (S104) eines Satzes von Zeitdifferenzen zwischen aufeinanderfolgenden Zeitstempeln für jede der Zeitreihen von Zeitstempeln, wobei jede Zeitdifferenz einem ihrer aufeinanderfolgenden Zeitstempel zugeordnet wird;
- Korrelieren (S106) von Teilmengen von Zeitdifferenzen, die mindestens zwei der Messgeräte zugeordnet sind, wobei:
- wenn bestimmt wird, dass die Teilmengen von Zeitdifferenzen übereinstimmen, Zuordnen (S108) der entsprechenden Zeitstempel aus den übereinstimmenden Teilmengen von Zeitdifferenzen zueinander, wodurch die zugeordneten Zeitstempel und die zugeordneten gemessenen Produktionsartikelparameter miteinander verknüpft werden; und
- Speichern (S110) der zugeordneten Zeitstempel in einer Datenspeichervorrichtung.

2. Verfahren nach Anspruch 1, wobei die entsprechenden Zeitstempel aus den übereinstimmenden Teilmengen von Zeitdifferenzen die Zeitstempel sind, die der ersten Zeitdifferenz in der jeweiligen Teilmenge von Zeitdifferenzen zugeordnet sind.

3. Verfahren nach einem der Ansprüche 1 und 2, das umfasst:
- Bestimmen (S202) einer Teilmengen-Zeitdifferenz, die als die Zeitdifferenz zwischen den entsprechenden Zeitstempeln aus den übereinstimmenden Teilmengen von Zeitdifferenzen definiert ist;
- Vergleichen (S204) der Teilmengen-Zeitdifferenz mit einer zuvor festgelegten Teilmengen-Zeitdifferenz, und wobei:
- wenn bestimmt wird, dass die Teilmengen-Zeitdifferenz mit der zuvor festgelegten Teilmengen-Zeitdifferenz übereinstimmt, Speichern (S110) der zugeordneten Zeitstempel in der Datenspeichervorrichtung.

4. Verfahren nach einem der vorangehenden Ansprüche, das umfasst:
- vor dem Korrelieren der Teilmengen, erneutes Abtasten des Satzes von Zeitreihen, die den Zeitdifferenzen zugeordnet sind, um gleichmäßig beabstandete Zeitstempel zu bilden, und Interpolieren der Zeitdifferenzen gemäß den erneut abgetasteten Zeitstempeln.

5. Verfahren nach einem der vorangehenden Ansprüche, wobei die Verfahrensschritte für mehrere Produktionsartikel, die die Produktionslinie durchlaufen haben, wiederholt werden.

6. Verfahren nach einem der vorangehenden Ansprüche, wobei das Korrelieren der Teilmengen von Zeitdifferenzen das Finden einer besten Übereinstimmung zwischen Serien von Zeitdifferenzwerten umfasst.

7. Verfahren nach einem der vorangehenden Ansprüche, das das Speichern des Zeitstempels und jeder Zeitdifferenz umfasst.

8. Verfahren nach einem der vorangehenden Ansprüche, das das Korrelieren von Teilmengen von Zeitdifferenzen umfasst, die allen Messgeräten in der Produktionslinie zugeordnet sind.

9. Verfahren nach einem der vorangehenden Ansprüche, wobei die Zeitreihe eine zuvor festgelegte Anzahl von Zeitstempeln umfasst.

10. Verfahren nach Anspruch 9, wobei die zuvor festgelegte Anzahl von Zeitstempeln mindestens etwa 50, mindestens etwa 70 oder bevorzugt mindestens etwa 90 beträgt.

11. Verfahren nach einem der vorangehenden Ansprüche, wobei die Sätze von Zeitdifferenzen durch Eingeben der Produktionsartikel in die Produktion mit variierenden Zeitverzögerungen zwischen den Produktionsartikeln generiert werden.

12. Verfahren nach einem der vorangehenden Ansprüche, wobei die Sätze von Zeitdifferenzen durch Eingeben der Produktionsartikel in die Produktionslinie mit zuvor festgelegten variierenden Zeitverzögerungen zwischen den Produktionsartikeln generiert werden, um dadurch zuvor festgelegte Sätze von Zeitdifferenzen zu generieren.

13. Verfahren zum Verknüpfen von Produktionsartikelparametern eines Produktionsartikels (102), der in einer Produktionslinie (100) verarbeitet wird, die mehrere Messvorrichtungen (206, 207, 208, 209, 210) umfasst, die zum Messen von Produktionsartikelparametern konfiguriert sind, wobei das System umfasst:
- eine Datenspeichervorrichtung (202); und
- eine Steuereinheit (204), die dafür konfiguriert ist, Daten von den Messgeräten zu empfangen, wobei die Daten Zeitstempel und Produktionsartikelparameter umfassen, die durch die Messgeräte an den Zeitpunkten der Zeitstempel gemessen werden,
**dadurch gekennzeichnet, dass**
die Steuereinheit konfiguriert ist zum:
- Abrufen einer Zeitreihe (302, 304, 306) von Zeitstempeln (302a-e, 304a-d, 306a-d) von jeder Messvorrichtung, wobei jeder Zeitstempel einem gemessenen Produktionsartikelparameter zugeordnet wird;
- Bestimmen eines Satzes von Zeitdifferenzen zwischen aufeinanderfolgenden Zeitstempeln für jede der Zeitreihen von Zeitstempeln, wobei jede Zeitdifferenz einem ihrer aufeinanderfolgenden Zeitstempel zugeordnet wird;
- Korrelieren von Teilmengen von Zeitdifferenzen, die mindestens zwei der Messgeräte zugeordnet sind;
- Zuordnen entsprechender Zeitstempel aus den übereinstimmenden Teilmengen von Zeitdifferenzen zueinander, wodurch die zugeordneten Zeitstempel und die zugeordneten gemessenen Produktionsartikelparameter miteinander verknüpft werden; und
- Speichern der zugeordneten Zeitstempel in einer Datenspeichervorrichtung.

14. System nach Anspruch 13, das ein Display zum visuellen Darstellen der Produktionsartikelparameter umfasst, die jeweiligen entsprechenden Zeitstempeln aus den übereinstimmenden Teilmengen von Zeitdifferenzen für einzelne Produktionsartikel in einer kollektiven Weise zugeordnet sind.

15. Computerprogrammprodukt, das ein computerlesbares Medium umfasst, auf dem Computerprogrammmittel zum Verknüpfen von Produktionsartikelparametern von Produktionsartikeln gespeichert sind, die in einer Produktionslinie (100) verarbeitet werden, die mehrere Messvorrichtungen (206, 207, 208, 209, 210) umfasst, die zum Messen von Produktionsartikelparametern konfiguriert sind, wobei das Computerprogrammprodukt umfasst:
Code zum Abrufen einer Zeitreihe (302, 304, 306) von Zeitstempeln (302a-e, 304a-d, 306a-d) für jede Messvorrichtung, die angibt, wann ein Produktionsartikel die jeweilige Messvorrichtung in der Produktionslinie passiert hat, wobei jeder Zeitstempel einem gemessenen Produktionsartikelparameterwert zugeordnet ist;
**gekennzeichnet durch**:
Code zum Bestimmen eines Satzes von Zeitdifferenzen zwischen aufeinanderfolgenden Zeitstempeln für jede der Zeitreihen von Zeitstempeln, wobei jede Zeitdifferenz einem ihrer aufeinanderfolgenden Zeitstempel zugeordnet ist;
Code zur Korrelieren von Teilmengen von Zeitdifferenzen, die mindestens zwei der Messgeräte zugeordnet sind;
Code zum - wenn bestimmt wird, dass die Teilmengen von Zeitdifferenzen übereinstimmen - Zuordnen der entsprechenden Zeitstempel aus den übereinstimmenden Teilmengen von Zeitdifferenzen zueinander, wodurch die zugeordneten Zeitstempel und die zugeordneten gemessenen Produktionsartikelparameter miteinander verknüpft werden; und
Code zum Speichern der zugeordneten Zeitstempel in einer Datenspeichervorrichtung.

## Revendications

1. Procédé pour relier des paramètres d'articles (100) traités dans une ligne de production (100) comprenant une pluralité de dispositifs de mesure (106, 108, 110) configurés pour mesurer des paramètres d'article, le procédé comprenant :
- la récupération (S102) d'une série temporelle (302, 304, 306) d'horodatages (302a-e, 304a-d, 306a-d) pour chaque dispositif de mesure indiquant quand un article est passé devant le dispositif de mesure respectif (106, 108, 110) dans la ligne de production (100), dans lequel chaque horodatage est associé à une valeur de paramètre d'article mesuré ;
**caractérisé par** :
- la détermination (S104) d'un ensemble de différences temporelles entre des horodatages consécutifs pour chacune des séries temporelles d'horodatages, dans lequel chaque différence temporelle est associée à l'un de ses horodatages consécutifs ;
- la corrélation (S106) de sous-ensembles de différences temporelles associés à au moins deux des dispositifs de mesure, comprenant
- quand il est déterminé que les sous-ensembles de différences temporelles correspondent, l'association entre eux (S108) des horodatages correspondants provenant des sous-ensembles de différences temporelles correspondants, reliant ainsi entre eux les horodatages associés et les paramètres d'article mesurés associés ; et
- le stockage (S110) des horodatages associés dans un dispositif de stockage de données.

2. Procédé selon la revendication 1, dans lequel les horodatages correspondants provenant des sous-ensembles de différences temporelles correspondants sont les horodatages associés à la première différence temporelle dans le sous-ensemble respectif de différences temporelles.

3. Procédé selon l'une quelconque des revendications 1 et 2, comprenant :
- la détermination (S202) d'une différence temporelle de sous-ensemble définie comme étant la différence temporelle entre les horodatages correspondants à partir des sous-ensembles de différences temporelles correspondants ;
- la comparaison (S204) de la différence temporelle de sous-ensemble à une différence temporelle de sous-ensemble prédéterminée, et dans lequel
- quand il est déterminé que la différence temporelle de sous-ensemble correspond à la différence temporelle de sous-ensemble prédéterminée, le stockage (S110) des horodatages associés dans le dispositif de stockage de données.

4. Procédé selon l'une quelconque des revendications précédentes, comprenant :
- avant la corrélation des sous-ensembles, le rééchantillonnage de l'ensemble de séries temporelles associé aux différences temporelles pour former des horodatages équidistants, et l'interpolation des différences temporelles conformément aux horodatages rééchantillonnés.

5. Procédé selon l'une quelconque des revendications précédentes, dans lequel les étapes du procédé sont répétées pour une pluralité d'articles qui sont passés par la ligne de production.

6. Procédé selon l'une quelconque des revendications précédentes, dans lequel la corrélation des sous-ensembles de différences temporelles comprend la recherche de la meilleure correspondance entre des séries de valeurs de différence temporelle.

7. Procédé selon l'une quelconque des revendications précédentes, comprenant le stockage de l'horodatage et de chaque différence temporelle.

8. Procédé selon l'une quelconque des revendications précédentes, comprenant la corrélation de sous-ensembles de différences temporelles associés à tous les dispositifs de mesure dans la ligne de production.

9. Procédé selon l'une quelconque des revendications précédentes, dans lequel la série temporelle comprend un nombre prédéterminé d'horodatages.

10. Procédé selon la revendication 9, dans lequel le nombre prédéterminé d'horodatages est d'au moins environ 50, d'au moins environ 70, ou de préférence d'au moins environ 90.

11. Procédé selon l'une quelconque des revendications précédentes, dans lequel les ensembles de différences temporelles sont générés en entrant les articles dans la production avec des délais de temporisation variables entre les articles.

12. Procédé selon l'une quelconque des revendications précédentes, dans lequel les ensembles de différences temporelles sont générés en entrant les articles dans la ligne de production avec des délais de temporisation variables prédéterminés entre les articles, pour ainsi générer des ensembles prédéterminés de différences temporelles.

13. Système pour relier des paramètres d'article d'un article (102) traité dans une ligne de production (100) comprenant une pluralité de dispositifs de mesure (206, 207, 208, 209, 210) configurés pour mesurer des paramètres d'article, le système comprenant :
- un dispositif de stockage de données (202) ; et
- une unité de contrôle (204) configurée pour recevoir des données des dispositifs de mesure, les données comprenant des horodatages et des paramètres d'article mesurés par les dispositifs de mesure au moment des horodatages,
**caractérisé par** :
la configuration de l'unité de contrôle pour :
- extraire une série temporelle (302, 304, 306) d'horodatages (302a-e, 304a-d, 306a-d) de chaque dispositif de mesure, dans lequel chaque horodatage est associé à un paramètre d'article mesuré ;
- déterminer un ensemble de différences temporelles entre des horodatages consécutifs pour chacune des séries temporelles d'horodatages, dans lequel chaque différence temporelle est associée à l'un de ses horodatages consécutifs ;
- corréler des sous-ensembles de différences temporelles associés à au moins deux des dispositifs de mesure ;
- associer entre eux les horodatages correspondants des sous-ensembles de différences temporelles correspondants, reliant ainsi entre eux les horodatages associés et les paramètres d'article mesurés associés ; et
- stocker les horodatages associés dans un dispositif de stockage de données.

14. Système selon la revendication 13, comprenant un affichage pour présenter visuellement les paramètres d'article associés à des horodatages correspondants respectifs à partir des sous-ensembles de différences temporelles correspondants pour des articles individuels de manière collective.

15. Produit logiciel comprenant un support lisible par un ordinateur sur lequel sont stockés des moyens logiciels pour relier des paramètres d'article d'articles traités dans une ligne de production (100) comprenant une pluralité de dispositifs de mesure (206, 207, 208, 209, 210) configurés pour mesurer des paramètres d'article, dans lequel le produit logiciel comprend :
un code pour extraire une série temporelle (302, 304, 306) d'horodatages (302a-e, 304a-d, 306a-d) pour chaque dispositif de mesure indiquant quand un article est passé par le dispositif de mesure respectif dans la ligne de production, dans lequel chaque horodatage est associé à une valeur de paramètre d'article mesuré ;
**caractérisé par** :
un code pour déterminer un ensemble de différences temporelles entre des horodatages consécutifs pour chacune des séries temporelles d'horodatages, dans lequel chaque différence temporelle est associée à l'un de ses horodatages consécutifs ;
un code pour corréler des sous-ensembles de différences temporelles associés à au moins deux des dispositifs de mesure ;
un code pour, quand il est déterminé que les sous-ensembles de différences temporelles correspondent, associer entre eux les horodatages correspondants provenant des sous-ensembles de différences temporelles correspondants, reliant ainsi entre eux les horodatages associés et les paramètres d'article mesurés associés ; et
un code pour stocker les horodatages associés dans un dispositif de stockage de données.
